# FASCICULE DE BREVET EUROPEEN

(11) **EP 2 996 816 B1**
(45) Date de publication et mention de la délivrance du brevet: **10.04.2019**
(21) Numéro de dépôt: 14727743.8
(22) Date de dépôt: 15.05.2014
(51) Int. Cl.: B05D 1/20

(54) **PROCEDE DE REALISATION D'UN SUBSTRAT PAR PROJECTION DE PARTICULES SUR UN FILM COMPACT DE PARTICULES SOLIDES FLOTTANT SUR UN LIQUIDE PORTEUR**
VERFAHREN ZUR HERSTELLUNG EINES SUBSTRATS DURCH SPRÜHEN VON PARTIKELN AUF EINE KOMPAKTE FOLIE AUS FESTEN, AUF EINER TRÄGERFLÜSSIGKEIT SCHWEBENDEN TEILCHEN
METHOD FOR PRODUCING A SUBSTRATE BY SPRAYING PARTICLES ONTO A COMPACT FILM OF SOLID PARTICLES FLOATING ON A CARRIER LIQUID

(30) Priorité: 16.05.2013 FR 1354398
(43) Date de publication de la demande: 23.03.2016
(73) Titulaire: Commissariat à l'Énergie Atomique et aux Énergies Alternatives, 75015 Paris (FR)
(72) Inventeur: DELLEA, Olivier, F-42350 La Talaudiere (FR); CORONEL, Philippe, F-38530 Barraux (FR); DREUILLES, Nicolas, F-31840 Aussonne (FR); FUGIER, Pascal, F-38190 Bernin (FR)
(74) Mandataire: Brevalex
(86) Numéro de dépôt international: PCT/EP2014/059981
(87) Numéro de publication internationale: WO 2014/184303

(56) Documents cités:
- WO-A1-99/38623
- WO-A1-2008/014604
- WO-A1-2013/117678
- WO-A2-01/89717
- US-A1- 2005 129 867
- US-A1- 2005 281 944
- MARIA BARDOSOVA ET AL: "The Langmuir-Blodgett Approach to Making Colloidal Photonic Crystals from Silica Spheres", ADVANCED MATERIALS, vol. 22, no. 29, 3 août 2010 (2010-08-03), pages 3104-3124, XP055042092, ISSN: 0935-9648, DOI: 10.1002/adma.200903708

## Description

L'invention se rapporte au domaine des procédés de fabrication d'ensembles de particules solides formant un film compact et étant liées par un substrat, comme par exemple connu du document WO2013/117678. Elle concerne plus spécifiquement la fabrication de tels ensembles à caractère souple.

Plus précisément, elle concerne la fabrication d'un ensemble dont le film de particules solides ordonnées, de préférence du type monocouche, présente une taille de particules solides comprise entre quelques nanomètres et plusieurs centaines de micromètres. Les particules solides, de préférence de forme sphérique, peuvent par exemple être des particules de silice.

L'invention concerne également la fabrication d'un ensemble dont le film de particules solides ordonnées est destiné à être structuré, plus particulièrement en y intégrant d'autres types de particules, et/ou des objets maintenus en place par ces mêmes particules.

Dans le cas de l'intégration d'objets dans le film compact, il s'agit en particulier de fabriquer des dispositifs à caractère hybride, comme par exemple des capteurs. A titre indicatif, un dispositif hybride associe par définition sur un même substrat des objets ayant diverses fonctions, par exemple électroniques, optiques, électro-optiques, piézo-électriques, thermoélectriques, mécaniques, etc.

Les objets susceptibles d'être intégrés au film de particules solides sont par exemple :
- des composants électroniques actifs, tels que des transistors, microprocesseurs, circuits intégrés, etc. ;
- des composants passifs ou actifs de l'électronique, comme des résistances, capacités, diodes, photodiodes, bobines, pistes conductrices, préformes de soudure, etc. ;
- des composants optiques, tels que des lentilles, microlentilles, réseaux de diffraction, filtres, etc. ;
- des piles, micro-piles, micro-batteries, photo-détecteurs, cellules solaires, système RFID, etc. ;
- des particules ou agrégats nano ou micrométriques, actifs ou passifs, par exemple du type oxydes, polymères, métaux, semi-conducteurs, Janus (particules ayant deux faces de natures ou propriétés différentes), nanotubes, etc.

Plus particulièrement, l'invention concerne l'intégration d'objets dont les dimensions s'étendent :
- pour les composants : de l'échelle microscopique (quelques dizaines de microns), à l'échelle macroscopique (plus d'une dizaine de centimètres) ; et
- pour les particules et agrégats : du nanomètre à plusieurs centaines de microns.

Plus généralement, l'invention présente des applications dans le domaine des piles à combustible, de l'optique, de la photonique, du revêtement de polymère, des puces, des MEMs, de la structuration de surface pour l'électronique organique et le photovoltaïque, etc.

L'invention a pour objet un procédé de fabrication d'un ensemble de particules, de préférence ordonnées, liées par un substrat, comprenant les étapes suivantes :
- réalisation d'un film compact de particules solides flottant sur un liquide porteur, les particules solides maintenant éventuellement entre elles des objets ;
- projection de particules sur la face du film compact opposée à celle baignant dans ledit liquide porteur, de manière à créer une pellicule formant substrat adhérant auxdites particules solides et recouvrant l'intégralité du film compact de particules solides ; et
- extraction en dehors du liquide porteur de l'ensemble obtenu.
L'invention est remarquable en ce qu'elle rompt entièrement avec les techniques antérieures dans lesquelles le film compact de particules était toujours déposé sur un substrat placé en sortie de la zone de transfert comprenant le liquide porteur. Dans l'invention, il est au contraire proposé de réaliser une pellicule formant substrat alors que le film compact se trouve toujours sur le liquide porteur, par projection de particules sur la face émergée du film.

L'invention présente de multiples avantages parmi lesquels une simplicité de mise en oeuvre de l'étape de réalisation de la pellicule formant substrat. De plus, par rapport aux solutions de l'art antérieur, elle limite considérablement les risques de déstructuration du film et/ou de modification de l'emplacement des objets intégrés à ce film.

En outre, l'invention n'est plus limitée par les substrats disponibles dans le commerce, puisqu'elle repose à présent sur un concept de projection de particules. La nature du substrat obtenu peut ainsi être très diversifiée et donc s'adapter au mieux à l'ensemble des applications envisagées. A cet égard, en fonction des besoins rencontrés, il est par exemple possible d'adapter plusieurs paramètres comme l'épaisseur de la pellicule, sa composition, etc.

D'ailleurs, avec cette technique de projection, les substrats obtenus peuvent présenter une bien meilleure flexibilité, en particulier grâce à une épaisseur faible. Aussi, il peut être prévu que l'épaisseur moyenne de la pellicule formant substrat ne corresponde qu'à 50 à 99% de l'épaisseur moyenne de l'ensemble comprenant ce substrat, le film de particules solides liées par ce substrat, et éventuellement des objets maintenus par ces mêmes particules solides. De préférence, la pellicule formant substrat est réalisée de manière à présenter une épaisseur moyenne comprise entre 1 et 100 µm.

Cette grande flexibilité est notamment avantageuse lorsque les ensembles obtenus sont superposés pour la réalisation d'un dispositif à plusieurs couches empilées, car c'est la flexibilité globale du dispositif obtenu qui est améliorée.

Toujours dans cette hypothèse où des ensembles sont empilés, l'invention est très avantageuse en ce qu'elle permet de facilement fonctionnaliser le substrat, qui est alors capable de conférer des connexions diversifiées entre les ensembles empilés.

Comme évoqué ci-dessus, les particules solides sont préférentiellement ordonnées.

Selon une alternative, des objets peuvent être simplement placés sur les particules solides.

De préférence, l'étape de projection des particules est réalisée par vaporisation d'un liquide ou par nébulisation.

De préférence, les particules projetées lors de l'étape de projection des particules comprennent des monomères polymérisables, et encore plus préférentiellement des monomères photopolymérisables.

De préférence, le liquide porteur se situe dans une zone de transfert comprenant une entrée de particules solides ainsi qu'une sortie de particules solides, la zone de transfert est alimentée en particules solides en continu par ladite entrée, et ladite étape d'extraction de l'ensemble obtenu s'effectue en continu par ladite sortie. Alternativement, l'extraction pourrait être réalisée avec l'ensemble statique sur le liquide porteur, de manière manuelle avec des outils appropriés, ou bien de façon automatisée.

Dans le cas d'une formation du film en continu et d'une extraction en continu, ladite étape de réalisation du film compact de particules solides sur le liquide porteur est préférentiellement mise en oeuvre en faisant s'accumuler les particules sur une butée placée à la sortie de la zone de transfert.

Dans cette configuration, la butée est de préférence un rouleau et ladite étape d'extraction de l'ensemble par la sortie de la zone de transfert est réalisée par mise en rotation dudit rouleau. De préférence, la rotation du rouleau est libre et accompagne le tirage de l'ensemble réalisé par tout autre moyen. Alternativement, le rouleau est motorisé et provoque, de par sa rotation, l'extraction de l'ensemble obtenu.

De préférence, le procédé met en oeuvre une rampe inclinée de circulation des particules solides, rattachée à ladite entrée de la zone de transfert, et sur laquelle ledit liquide porteur est également de préférence destiné à circuler.

Néanmoins, il est noté que le film compact de particules, dont le concept est par exemple divulgué dans le document Sachin Kinge, "Self-Assembling Nanoparticles at Surfaces and Interfaces", ChemPhysChem 2008, 9, 20-42, peut être obtenu à la surface du liquide porteur par toute technique connue de l'homme du métier, par exemple par compression, et/ou interaction dipôle-dipôle, et/ou par champ magnétique, etc.

La technique par interaction dipôle-dipôle s'applique pour les particules à facettes, par exemple tétraédriques, cubiques ou encore octaédriques. Avec ces formes, les interactions dipôle-dipôle jouent un rôle important dans l'organisation des particules. Les moments dipolaires sont générés à l'intérieur de ces particules, à cause des différences de polarité entre les facettes.

La technique d'organisation par champ magnétique est employée avec des nanoparticules magnétiques pouvant être ordonnées en utilisant un champ magnétique intense, générant des interactions fortes entre les particules.

La technique par compression est notamment connue du document Lucio Isa et al., "Particle Lithography from Colloidal Self-Assembly at Liquid_Liquid Interfaces", acsnano, VOL. 4 ▪ NO. 10 ▪ 5665-5670 ▪ 2010, du document Markus Retsch, « Fabrication of Large-Area, Transferable Colloidal Monolayers Utilizing Self-Assembly at the Air/Water Interface", Macromol. Chem. Phys. 2009, 210, 230-241, ou encore du document Maria Bardosova, « The Langmuir-Blodgett Approach to Making Colloidal Photonic Crystals from Silica Spheres", Adv. Mater. 2010, 22, 3104-3124.

Cette technique par compression comprend également la solution à rampe inclinée décrite dans le document CA 2 695 449. Une partie de l'énergie nécessaire à l'ordonnancement des particules en régime normal est alors ici amenée par la rampe inclinée transportant le liquide porteur et les particules. D'autres solutions sont néanmoins possibles, comme la mise en mouvement, à l'aide d'une pompe, du liquide porteur sur un plan horizontal dont la partie aval constitue la zone de transfert des particules. Une autre solution consiste à remplacer la pompe par une soufflerie permettant d'appliquer un flux d'air à la surface du liquide porteur, sur lequel flottent les particules à transférer. Comme mentionné ci-dessus, d'autres solutions sont néanmoins envisageables, sans sortir du cadre de l'invention, comme un travail de compression des particules via une technique dite « Langmuir-Blodgett ».

De préférence, ladite étape de projection de particules est réalisée de manière à obtenir une pellicule formant substrat présentant une pluralité de zones de caractéristiques différentes. Il peut par exemple s'agir de zones de compositions différentes, par exemple des zones électriquement isolantes et des zones électriquement conductrices. Néanmoins, il peut s'agir de tout autre type de caractéristiques qui diffèrent entre les zones, comme l'épaisseur, le niveau de transparence à la lumière, la flexibilité, etc.

De préférence, lesdites différentes zones du substrat sont obtenues à l'aide d'un ou plusieurs masques, quelle que soit la technique d'extraction retenue pour l'ensemble, c'est-à-dire que ce dernier soit destiné à être extrait du liquide porteur en position statique sur celui-ci, ou bien par tirage.

De préférence, ladite pellicule formant substrat est réalisée à partir d'une composition comprenant un composé polymérisable, de préférence photoréticulable, de préférence de l'acrylonitrile. D'autres matériaux sont bien entendu envisageables, comme une substance à base de résine silicone, de résine époxy, et/ou de résine polyuréthane.

Quoiqu'il en soit, la polymérisation s'effectue de manière classique, par exemple par voie thermique et/ou optique, et s'opère au moins en partie lorsque les particules solides se trouvent encore dans la zone de transfert. L'extraction de l'ensemble en dehors de la zone de transfert s'effectue lorsque le niveau de polymérisation, partiel ou total, permet la manipulation de cet ensemble sans le dégrader.

De préférence, ladite substance projetée présente un caractère hydrophobe, et de préférence aussi à l'état solide polymérisé. De manière plus générale, tenant notamment compte des cas où le liquide porteur n'est pas de l'eau, il est noté que la substance projetée se révèle peu ou non-miscible avec le liquide porteur.

De préférence, ledit film compact de particules solides maintient au moins un objet parmi le groupe des puces en silicium, des micro-batteries, des composants de l'électronique organique, des éléments métalliques, des cellules photovoltaïques, des piles et micro-piles. Ces objets permettent notamment de fabriquer des dispositifs à caractère hybride, comme par exemple des capteurs.

L'invention concerne également un procédé de fabrication d'un dispositif à partir d'au moins deux ensembles chacun obtenu par la mise en oeuvre du procédé tel que décrit ci-dessus, les deux ensembles étant ensuite superposés et alignés. Dans ce cas de figure, les pellicules formant substrats peuvent avantageusement réaliser des connexions diverses entre les films / objets des ensembles directement consécutifs.

Par exemple, le dispositif est obtenu à partir d'au moins un premier ensemble et un second ensemble superposés et agencés au contact l'un de l'autre, de manière à ce que le premier ensemble comprenne un substrat agencé entre le film compact de particules solides du premier ensemble et le film compact de particules solides du second ensemble, et de façon à ce que ledit substrat comprenne une zone électriquement conductrice assurant la connexion électrique entre des parties électriquement conductrices du premier et du second films de particules solides. Comme évoqué ci-dessus, ces parties peuvent être des particules du film et/ou un/des objets maintenus par au moins l'un de ces films.

De préférence, le procédé est mis en oeuvre pour la fabrication d'un dispositif optoélectronique.

De préférence, le rapport entre la grande dimension des particules solides du film compact, et celle des objets intégrés dans le film, est compris entre 10⁴ et 10⁸. A titre d'exemple, les particules solides formant le film compact peuvent présenter une grande dimension de l'ordre de 1 nm à 500 µm, tandis que les objets peuvent quant à eux présenter une grande dimension allant jusqu'à environ 30 cm. Il est également possible d'utiliser des fibres de verre d'environ 10 µm de diamètre avec une longueur comprise entre 500 µm et 4 mm. L'avantage de ces fibres réside dans le renforcement mécanique de la membrane.

De préférence, les particules solides du film compact sont des billes de silice d'environ 1 µm de diamètre. Il est néanmoins noté que le film peut être hétérogène, à savoir comporter des billes de tailles différentes et/ou de compositions différentes.

De préférence, chaque objet présente une grande dimension supérieure à 0,2 cm, et de préférence inférieure à 30 cm. Cette dernière valeur peut être adaptée en fonction de la largeur du film obtenu. En effet, la grande dimension de chaque objet peut atteindre une valeur proche de la largeur finale de ce film. Des objets de taille micrométrique ou nanométrique peuvent également être utilisés, sans sortir du cadre de l'invention.

L'objet intégré au film, dont certains exemples ont été cités précédemment, peut être de toute forme, non-nécessairement plane, éventuellement présentant un ou plusieurs rayons de courbure, par exemple inférieur à 5 cm, ou encore intégrant des plots utiles pour la connectique. De même, pour les particules solides du film, les formes peuvent être variées, mais sont de préférence homogènes.

Par le biais de l'invention, il est également visé la fabrication de dispositifs complexes comme par exemple des capteurs (dispositif optoélectronique) comprenant des éléments de détections (des particules par exemple), un ou plusieurs systèmes de récupération d'énergie (cellule photovoltaïque, film piézo-électrique, pile à combustible), un système de stockage de l'énergie (micro-batterie), un système de gestion de l'information (puce en Silicium), un système de communication (puce RFID), des éléments de liaison électrique (pistes conductrices), des composants électroniques (résistances, condensateurs), des éléments de soudure (préformes). Les objets nécessaires à l'obtention de ces dispositifs sont alors agencés en conséquence sur le/les films obtenus, ces objets étant au besoin superposés.

D'autres avantages et caractéristiques de l'invention apparaîtront dans la description détaillée non limitative ci-dessous.

Cette description sera faite au regard des dessins annexés parmi lesquels ;
- la figure 1 montre une installation pour la mise en oeuvre d'un procédé de fabrication selon un mode de réalisation préféré de la présente invention, en coupe schématique prise le long de la ligne I-I de la figure 2 ;
- la figure 2 représente une vue schématique de dessus de l'installation montrée sur la figure 1 ;
- les figures 3 à 6 représentent différentes étapes d'un procédé de fabrication mis en oeuvre à l'aide de l'installation montrée sur les figures précédentes, selon un mode de réalisation préféré ;
- la figure 7 représente une vue schématique agrandie de l'ensemble obtenu suite à la mise en oeuvre du procédé schématisé sur les figures
- la figure 8 représente une vue montrant une technique de structuration du film compact de particules ;
- les figures 9a et 9b représentent des vues schématiques montrant une technique de réalisation d'un substrat à zones différenciées ;
- la figure 10 montre une vue schématique de fabrication d'un dispositif à l'aide de plusieurs ensembles tels qu'obtenus par la mise en oeuvre du procédé schématisé sur les figures précédentes ;
- les figures 11 à 13 représentent des vues montrant d'autres techniques de structuration du film compact de particules, visant à y intégrer des objets ; et
- la figure 14 montre une vue schématique de fabrication d'un dispositif optoélectronique, à l'aide de plusieurs ensembles tels qu'obtenus par la mise en oeuvre du procédé schématisé sur les figures précédentes.

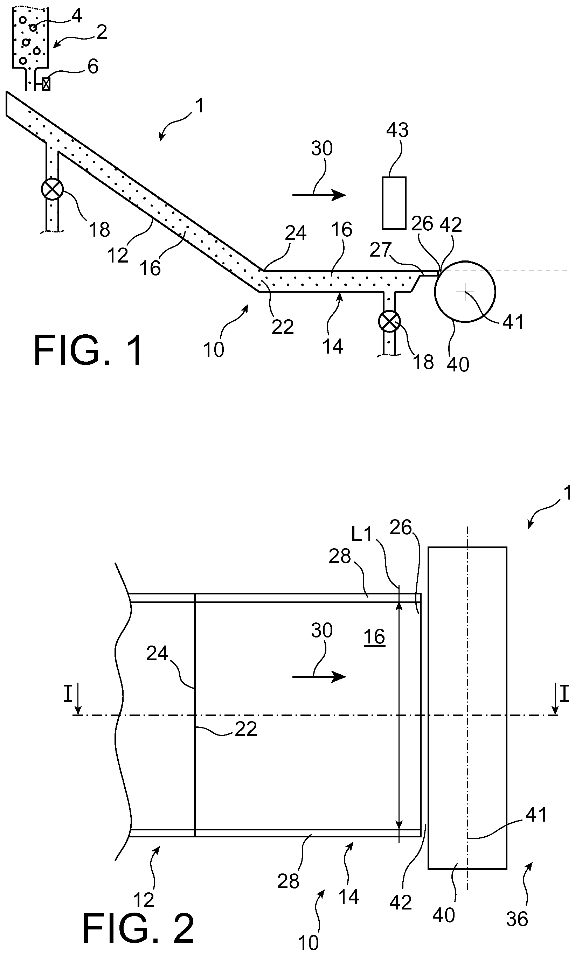

En référence tout d'abord aux figures 1 et 2, il est représenté une installation 1 pour la fabrication d'un ensemble comprenant un film compact de particules solides liées par un substrat.

L'installation 1 comporte un dispositif 2 de dispense de particules 4, dont la taille peut être comprise entre quelques nanomètres et plusieurs centaines de micromètres. Les particules solides, de préférence de forme sphérique, peuvent par exemple être des particules de silice. D'autres particules d'intérêt peuvent être faites de métal ou d'oxyde de métal comme le Platine, le TiO₂, de polymère comme le polystyrène ou le PMMA, de carbone, etc. Comme évoqué ci-dessus, les fibres présentent également un intérêt certain. A ces exemples s'ajoutent également les particules de type Janus, avec deux faces de natures distinctes, et des particules de type coeur-coquille.

Plus précisément, dans le mode de réalisation préféré, les particules sont des sphères de silice d'environ 1 µm de diamètre, stockées en solution dans le dispositif de dispense 2. La proportion du milieu est d'environ 7 g de particules pour 200 ml de solution, ici du butanol. Naturellement, pour des raisons de clarté, les particules représentées sur les figures adoptent un diamètre supérieur à leur diamètre réel.

Le dispositif de dispense 2 présente une buse d'injection 6 commandable, d'environ 500 µm de diamètre.

L'installation comporte également un convoyeur liquide 10, intégrant une rampe inclinée 12 de circulation des particules, et une zone de transfert 14 sensiblement horizontale, voire présentant une légère inclinaison de façon à favoriser la vidange de l'installation, le cas échéant. L'extrémité haute de la rampe inclinée est prévue pour recevoir les particules injectées depuis le dispositif de dispense 2. Cette rampe est droite, inclinée d'un angle compris entre 5 et 60°, de préférence entre 10 et 30°, permettant aux particules d'être acheminées vers la zone de transfert 14. De plus, un liquide porteur 16 circule sur cette rampe 12, jusque dans la zone de transfert. Ce liquide 16 peut d'ailleurs être re-circulé à l'aide d'une ou deux pompes 18, entre la zone de transfert 14 et l'extrémité haute de la rampe. Il s'agit ici de préférence d'une eau déionisée, sur laquelle les particules 4 peuvent flotter. Néanmoins, un liquide neuf peut être privilégié via un circuit de circulation ouvert. Il peut aussi s'agir d'une association de plusieurs liquides non-miscibles.

L'extrémité basse de cette même rampe est raccordée à une entrée de la zone de transfert de particules 14. Cette entrée 22 se situe au niveau d'une ligne d'inflexion 24 matérialisant la jonction entre la surface du liquide porteur présent sur le plan incliné de la rampe 12, et la surface du liquide porteur présent sur la partie horizontale de la zone de transfert 14.

L'entrée de particules 22 est espacée d'une sortie de particules 26 à l'aide de deux rebords latéraux 28 retenant le liquide porteur 16 dans la zone 14. Ces rebords 28, en regard et à distance l'un de l'autre, s'étendent parallèlement à une direction principale d'écoulement du liquide porteur et des particules dans l'installation, cette direction étant schématisée par la flèche 30 sur les figures 1 et 2. La zone 14 prend par conséquent la forme d'un couloir ou d'un chemin ouvert à son entrée et à sa sortie, même si d'autres géométries pourraient être adoptées, sans sortir du cadre de l'invention.

Le fond de la partie aval de la zone de transfert présente un plateau légèrement incliné vers l'amont par rapport à la direction horizontale, par exemple d'une valeur de l'ordre de 5 à 10°. C'est l'extrémité aval de ce même plateau 27, également dénommé « blade », qui définit en partie la sortie de particules 26.

L'installation 1 est également pourvue d'une butée 40 sur laquelle les particules solides sont destinées à s'accumuler pour créer leur ordonnancement. Cette butée prend de préférence la forme d'un rouleau 40 situé à la sortie de particule 26 de la zone de transfert 14. L'axe 41 du rouleau 40 est parallèle à la sortie 26 de la zone 14, à proximité de laquelle ce rouleau se situe. En effet, comme cela sera détaillé ci-après, il est fait en sorte que l'ensemble obtenu atteignant la sortie 26 puisse être transféré aisément sur ce rouleau 40, via un pont capillaire 42, également dénommé ménisque, qui le relie au liquide porteur 16. Alternativement, le rouleau peut être au contact directement de la zone de transfert, sans sortir du cadre de l'invention. Le pont capillaire mentionné ci-dessus n'est alors plus requis.

Ici, le rouleau 40 peut être libre en rotation selon son axe 41, ou, plus préférentiellement, sa rotation est bridée par un moteur de manière à éviter tout risque que ce rouleau tourne en sens contraire à la direction normale de constitution du film.

Dans l'exemple montré sur les figures, la largeur du rouleau 40 correspond à la largeur de la zone 14 et de sa sortie 26. Il s'agit d'une largeur L1 qui correspond aussi à la largeur du film de particules solides destiné à être obtenu.

En outre, au niveau d'une partie aval de la zone de transfert 14, l'installation comprend des moyens 43 permettant de vaporiser un liquide, le but étant de projeter des particules sur le film compact obtenu avant l'extraction en dehors de la zone de transfert. Pour assurer cette vaporisation du liquide, les moyens 43 peuvent prendre la forme d'un spray, également dit spray aérosol, dont le but est d'assurer une pulvérisation de fines gouttelettes. Alternativement, la projection de particules peut s'effectuer par nébulisation, à l'aide de moyens 43 prenant alors la forme d'un nébuliseur correspondant globalement à un appareil permettant de transformer un liquide en un nuage de particules extrêmement fines (quelques micromètres à quelques dizaines de micromètres), ce nuage étant également dénommé brouillard. Cette technique de nébulisation est également appelée technique de brumisation.

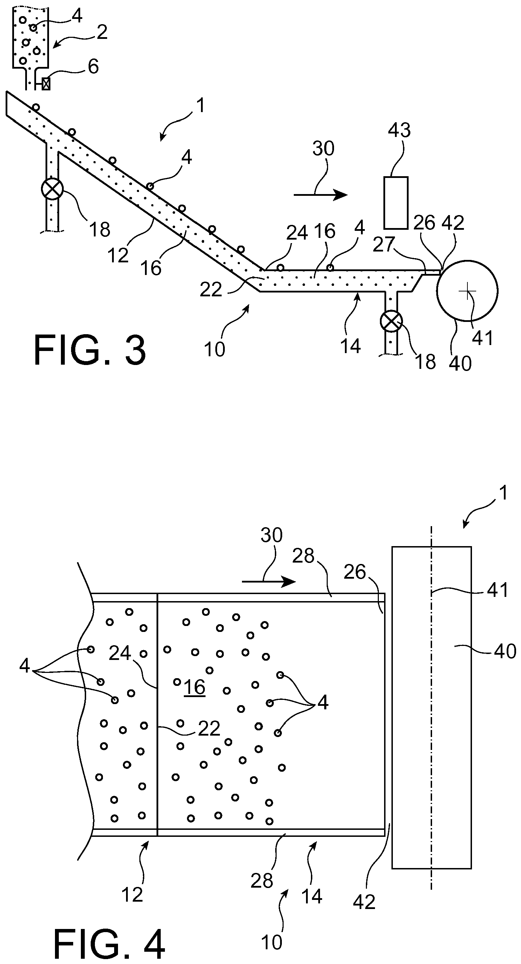

Un procédé de fabrication d'un ensemble selon un mode de réalisation va maintenant être décrit en référence aux figures 3 à 6.

Tout d'abord, la buse d'injection 6 est activée pour débuter la dispense des particules 4 sur la rampe 12. Il s'agit de mettre en oeuvre une étape initiale de remplissage de la zone de transfert 14, par les particules 4, avec le liquide porteur 16 déjà au niveau requis dans la zone 14.

Durant cette phase d'amorçage, les particules dispensées par le dispositif 2 circulent sur la rampe 12, puis pénètrent dans la zone 14 dans laquelle elles se dispersent, comme cela a été schématisé sur les figures 3 et 4.

Au fur et à mesure que les particules 4 sont injectées sur la rampe 12 et pénètrent dans la zone de transfert 14, elles viennent en butée contre le rouleau 40 qui reste statique à ce stade, puis le front amont de ces particules a tendance à se décaler vers l'amont, en direction de la ligne d'inflexion 24. L'injection de particules est poursuivie même après que ce front amont ait dépassé la ligne 24, afin qu'il remonte sur la rampe inclinée 12.

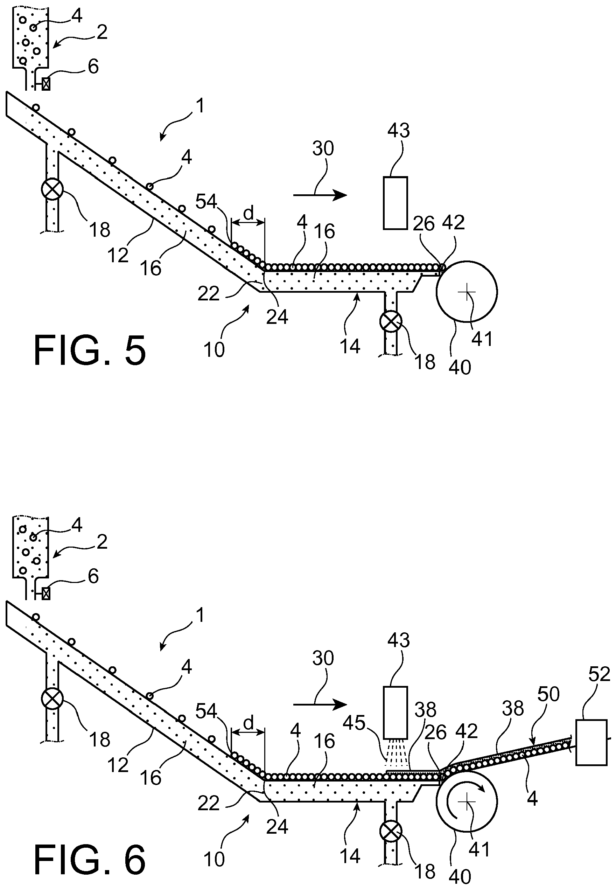

Effectivement, il est fait en sorte que le front amont de particules 54 remonte sur la rampe 12 de manière à ce qu'il se situe à une distance horizontale « d » donnée de la ligne d'inflexion 24, comme montré sur la figure 5. La distance « d » peut être de l'ordre de 30 mm.

A cet instant, les particules solides 4 sont ordonnées dans la zone de transfert et sur la rampe 12, sur laquelle elles s'ordonnent automatiquement, sans assistance, grâce notamment à leur énergie cinétique et aux forces capillaires mises à profit au moment de l'impact sur le front 54. L'ordonnancement est tel que le film compact obtenu présente une structure dite « hexagonale compacte », dans laquelle chaque particule 4 est entourée et contactée par six autres particules 4 en contact entre elles. Il est alors indifféremment parlé de film compact de particules, ou de film de particules ordonnées.

Une fois que les particules ordonnancées 4 formant le film recouvrent l'intégralité du liquide porteur situé dans la zone de transfert 14, il est procédé à une étape de projection de particules liquides sur le film, à l'aide du spray 43. Plus précisément, comme cela est montré sur la figure 6, la projection de fines gouttelettes 45 s'effectue sur la face du film compact opposée à celle baignant dans ledit liquide porteur 16, c'est-à-dire la face du film au contact de l'air ambiant. Cette projection est réalisée de manière à créer une pellicule formant substrat 38 adhérant aux particules solides ordonnées 4.

Cette pellicule est réalisée à partir d'une composition comprenant un composé polymérisable, de préférence photoréticulable, comme l'acrylonitrile afin d'obtenir un matériau substrat de la famille des acryliques. Par conséquent, même s'ils n'ont pas été représentés, l'installation comprend des moyens assurant la polymérisation de la substance vaporisée.

La projection est réalisée de manière à ce que les particules projetées restent sur la face du film se situant à l'air libre.

Cette technique de projection permet en particulier d'éviter les risques de déstructuration du film compact, notamment par rapport aux solutions de l'art antérieur mettant en oeuvre un substrat extérieur en défilement.

Dans le mode de réalisation décrit, l'entrée 22 de la zone 14 est alimentée en particules solides 4 en continu, tandis que l'extraction de l'ensemble 50 obtenu en aval du spray 43 est elle aussi réalisée en continu par la sortie 26. Par conséquent, la formation de la pellicule 38 est opérée lors du passage du film compact sous le spray 43, ce film étant de préférence entièrement polymérisé avant l'extraction de l'ensemble 50 en dehors du liquide porteur.

A cet égard, comme schématisé sur la figure 6, cette extraction est autorisée par la rotation du rouleau 40 selon son axe 41. En effet, sa rotation permet d'extraire en continu le film vers l'aval, tout en continuant à remplir sa fonction de butée nécessaire à l'ordonnancement des particules solides 4 plus en amont dans la zone de transfert 14. Des moyens de tirage 52 représentés schématiquement sur la figure 6 peuvent être employés pour appliquer la dynamique nécessaire à l'extraction de l'ensemble 50. Ces moyens 52, situés en aval du rouleau 40, conduisent alors ce dernier à tourner librement sous l'effet des efforts de friction et/ou de capillarité avec l'ensemble 50 en défilement. Alternativement, au lieu d'accompagner le tirage, le rouleau 40 pourrait être motorisé et appliquer de ce fait lui-même la dynamique à l'ensemble 50.

Au cours du défilement du film compact dans la zone de transfert, l'injection de particules solides et la vitesse de tirage de l'ensemble 50 sont réglées de sorte que le front de particules reste dans une position sensiblement identique. Pour ce faire, le débit de particules solides 4 peut être de l'ordre de 0,1 ml/min à plusieurs ml/min, tandis que la vitesse linéaire de l'ensemble 50, également dénommée vitesse de tirage, peut être de l'ordre de quelques mm/min à plusieurs centaines de mm/min. Comme cela sera évoqué ci-dessous, l'alimentation en particules 4 peut être stoppée temporairement lors de la réalisation de motifs, ou bien maintenue constante.

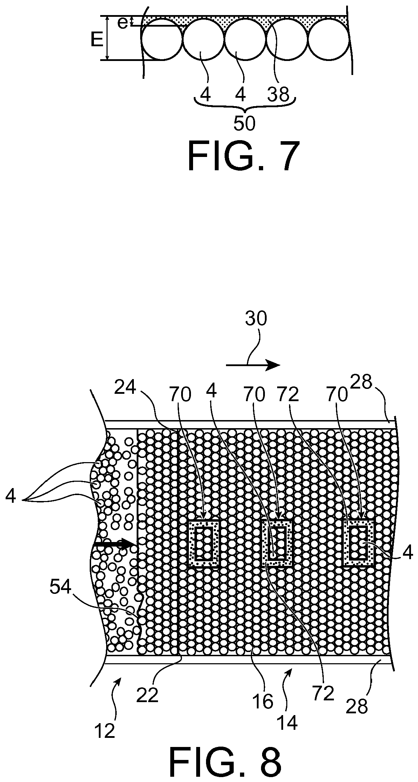

L'invention présente ainsi la particularité de former le substrat alors que le film de particules ordonnées 4 se trouve encore sur le liquide porteur. Cette technique par projection permet d'obtenir des épaisseurs de substrat faibles, tout en assurant l'adhérence aux particules 4. Comme cela est schématisé sur la figure 7, l'épaisseur moyenne « e » de la pellicule formant substrat 38 correspond à 50 à 99% de l'épaisseur moyenne « E » de l'ensemble 50 comportant le film de particules solides adhérant au substrat. Par exemple, la pellicule formant substrat est réalisée de manière à présenter une épaisseur moyenne « e » comprise entre 1 et 100 µm. Avec cette faible épaisseur, il est notamment possible de bénéficier d'une bonne flexibilité pour l'ensemble 50 extrait en continu de la zone de transfert. Cet ensemble 50, grâce à sa faible épaisseur, prend ainsi lui-même la forme d'un film pouvant avoir de multiples applications telles que celles mentionnées précédemment.

Pour élargir encore davantage le spectre des applications envisageables, il est possible de créer un film compact avec des particules solides 4 différentes, en dimensions et/ou matériaux.

Par exemple, pour obtenir un film hétérogène, il suffit simplement de dispenser tour à tour des particules de natures différentes, qui se retrouvent dans le film avec un ordre correspondant à celui dans lequel elles ont été dispensées. Aussi, il est possible d'alterner entre des particules solides 4 électriquement isolantes, conductrices, etc.

Une autre possibilité réside dans l'intervention directement au sein du film compact. A titre d'exemple indicatif, comme cela est schématisé sur la figure 8, il est possible de réaliser des motifs 70 sur le film compact 4, par dépôt d'une substance 72 sur les particules. Ici, chaque motif 70 prend la forme d'un cordon suivant une ligne fermée, mais pourrait alternativement prendre toute autre forme réputée appropriée en fonction des besoins rencontrés, comme une forme de point ou une forme surfacique. La figure 8 montre donc un exemple de plusieurs motifs 70 définis à l'aide de la substance 72 déposée, permettant de maintenir les unes par rapport aux autres les particules mouillées par cette substance 72, qui est ici de préférence du type comprenant un composé polymérisable. Bien entendu, les particules 4 situées intérieurement et extérieurement par rapport aux contours 72 en forme de cordons restent ordonnées.

Le dépôt de la substance polymérisable s'effectue par exemple à l'aide d'une buse de dispense ou d'une tête jet d'encre (non représentée). Cette dispense ainsi que les autres opérations spécifiques à cette structuration du film peuvent être réalisées en stoppant l'avancement du film ainsi que la dispense de particules 4.

A l'arrivée au contact des particules, la substance 72 est capable de s'adapter à la topographie du film ordonné, et adhère aux particules 4 qu'elle recouvre. Le composé polymérisable est par exemple une résine silicone, une résine époxy, et/ou une résine polyuréthane. La polymérisation s'effectue de manière classique, par exemple par voie thermique et/ou optique, et s'opère lorsque la substance se trouve encore dans la zone de transfert, avant le passage par le spray 43.

La substance 72 se présente alors sous forme de liquide ou de pâte, à laquelle des additifs peuvent éventuellement être ajoutés avant sa dispense.

La substance 72, après son dépôt sur le film, adhère à ce dernier en raison de sa composition.

L'étape suivante (non représentée) consiste à retirer les particules 4 entourées par les motifs 70, et de placer dans les zones évidées des particules solides de natures différente. Des objets peuvent également être placés dans ces zones évidées, sans sortir du cadre de l'invention.

Ensuite, c'est le film structuré 4 qui passe sous le spray 43 pour être entièrement recouvert par le substrat 38.

D'ailleurs, il est noté que l'étape de projection de particules peut elle aussi être pilotée de manière à obtenir une pellicule formant substrat 38 présentant une pluralité de zones de caractéristiques différentes, de préférence pour s'adapter aux particules solides 4 du film qui elles aussi sont de natures différentes.

Ces zones sont de préférence de compositions différentes en fonction des besoins rencontrés. D'autres paramètres peuvent néanmoins être évolutifs, comme l'épaisseur moyenne, la flexibilité, la transparence, etc.

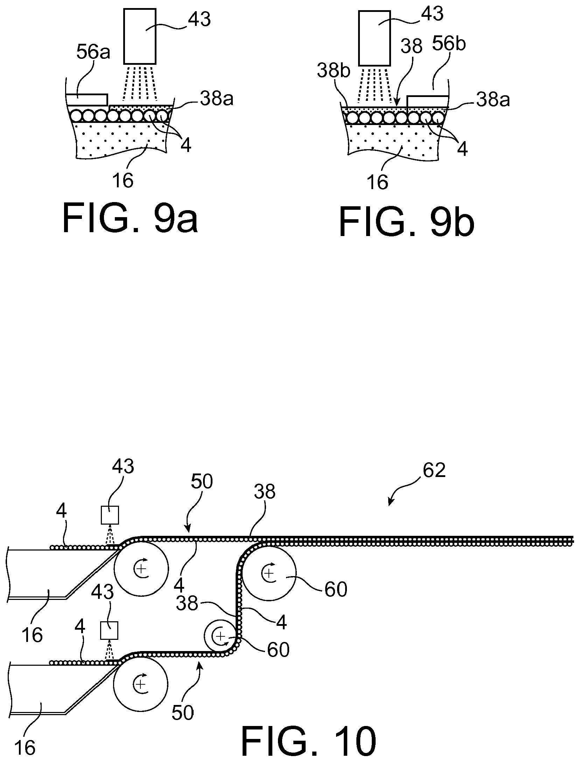

La formation de plusieurs zones est par exemple réalisée en projetant des particules liquides de compositions différentes. Les figures 9a et 9b montrent un exemple de réalisation dans lequel la projection alternée de compositions différentes s'effectue à l'aide de masques. Aussi, sur la figure 9a, le spray 43 pulvérise une première composition destinée à former une première zone 38a du substrat 38 au-dessus de certaines particules du film compact 4. Pour que la première substance ne soit pas déposée sur les particules 4 plus en amont dans le film, un masque 56a est placé au-dessus de ces mêmes particules, qui sont ensuite recouvertes par une seconde composition destinée à former une seconde zone 38b du substrat 38. Durant cette seconde pulvérisation, les particules 4 déjà recouvertes par la première zone de substrat 38a peuvent elles aussi être recouvertes par un masque 56b.

Naturellement, ces pulvérisations peuvent être réalisées à l'aide d'un ou plusieurs sprays, de façon alternée ou simultanée, et avec le film compact à l'arrêt ou en défilement sur le liquide porteur.

Comme évoqué ci-dessus, la différenciation de zones au sein du substrat 38 est particulièrement intéressante pour la fabrication d'un dispositif 62 à partir d'au moins deux ensembles 50, chacun obtenu par la mise en oeuvre du procédé qui vient d'être décrit, ces deux ensembles ou plus étant superposés après avoir été extraits de leurs zones de transfert respectives.

Un exemple de réalisation est montré sur la figure 10, sur laquelle deux installations 1 similaires sont prévues afin de former respectivement un premier ensemble 50 et un second ensemble 50 qui, après avoir été extraits du liquide porteur, sont ensuite amenés au contact l'un de l'autre après leur passage par des rouleaux 60 ou similaires.

Par conséquent, le substrat 38 du premier ensemble 50, celui en-dessous dans l'empilement, est interposé entre le film de particules du premier ensemble et le film de particules du second ensemble. C'est d'ailleurs ce substrat 38 qui permet d'obtenir l'adhérence entre les deux ensembles superposés 50.

De plus, des connexions appropriées peuvent ainsi être réalisées entre les deux films 4, puisque les substrats deviennent partie intégrante des dispositifs 62 ainsi créés.

A cet égard, il est noté que cet aspect est également intéressant pour relier des objets intégrés à deux ensembles directement consécutifs. Aussi, l'invention prévoit la possibilité de former des films compacts avec des particules maintenant entre elles des objets, comme cela va être décrit ci-dessous.

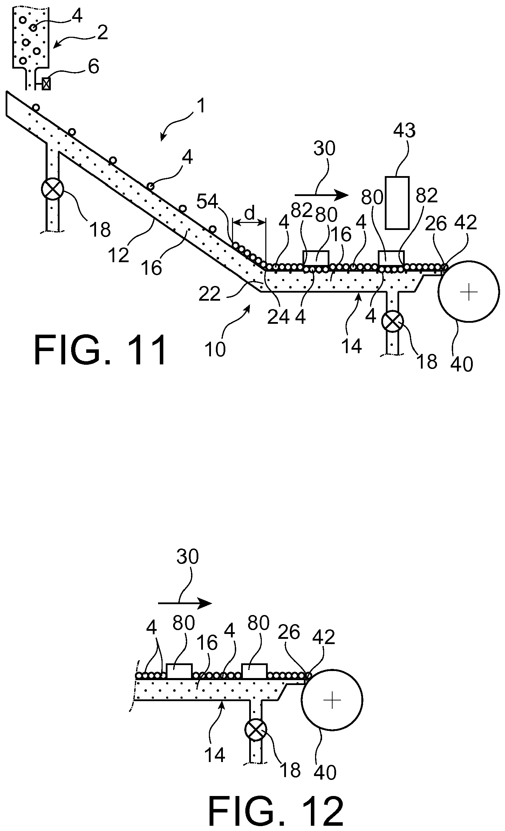

Un exemple de réalisation est montré sur la figure 11. Une fois que les particules ordonnancées 4 recouvrent l'intégralité du liquide porteur situé dans la zone de transfert 14, les objets 80 à intégrer au film peuvent être mis en place au-dessus du film, à des emplacements prédéterminés. Cette mise en place peut être réalisée à l'aide d'outils de manipulation ou de préhension conventionnels adaptés à la nature, la forme et la dimension des objets, comme des pinces, selon une technique dite de *« pick and place »*. D'autres solutions sont envisagées, sans sortir du cadre de l'invention. Comme le montre la figure 11, le positionnement des objets 80 sur le film a pour conséquence de créer un enfoncement des particules 4 qui supportent ces mêmes objets, dans le liquide porteur 16 formant convoyeur. Il est noté que les objets peuvent être tenus à la surface du liquide par la tension superficielle de ce liquide, le film de particules modifiant la tension superficielle du liquide pouvant alors contribuer, dans une certaine mesure, à la tenue de ces objets.

Plus précisément, les particules enfoncées 4 situées sous chaque objet 80 définissent alors une rupture de niveau 82 avec les autres particules environnantes 4. Ce sont alors ces mêmes particules environnantes qui enserrent la périphérie de chaque objet 80, permettant ainsi de les maintenir en position les uns par rapport aux autres, ainsi que par rapport à la structure fixe de la zone de transfert.

Chaque rupture de niveau 82 est de préférence inférieure au diamètre des particules 4, de sorte que les particules enfoncées 4 soient également retenues et maintenues par les particules environnantes. Néanmoins, lorsque des objets dits « lourds » sont posés sur le film, la surface du liquide peut se déformer de façon importante dans une proportion équivalente voire supérieure au diamètre des particules. L'essentiel est que l'objet posé ne crée pas une discontinuité trop importante susceptible d'entraîner le déchirement du film de particules.

La mise en position des premiers objets, ainsi que des suivants, s'effectue préférentiellement sans arrêter le flux de particules provenant de la rampe 12, bien qu'il puisse en être autrement, sans sortir du cadre de l'invention.

C'est ensuite le film 4 pourvu des objets 80 qui passe sous le spray 43 pour que l'intégralité soit revêtue par le substrat 38.

Selon une alternative de réalisation illustrée sur la figure 12, les objets 80 ne sont pas posés sur le film de particules ordonnées 4, mais flottent sur le liquide porteur 16 en étant entourés par ce même film. Ici, les objets 80 sont alors préférentiellement placés sur le liquide porteur avant ou pendant la formation du film compact de particules, qui se constitue ensuite autour de ces objets de manière à les maintenir en position en les enserrant à leur périphérie. Les objets présentent ainsi une surface inférieure directement en contact avec le liquide porteur. Dans ce mode de réalisation, c'est également le film de particules ordonnées qui permet de maintenir les objets en position et de les transporter de façon ordonnée, jusqu'au dépôt du substrat par projection de particules liquides.

Il est indiqué que plusieurs solutions sont possibles pour le dépôt des objets 80. Parmi les solutions préférées, il existe celle consistant à prévoir un ou plusieurs convoyeurs pour le transport de ces objets vers la zone de transfert.

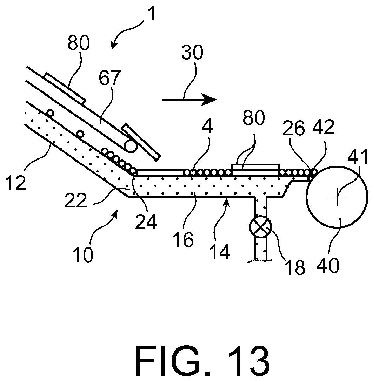

Chaque convoyeur 67 est de préférence parallèle à la rampe 12, comme cela est montré sur la figure 13. Le convoyeur 67, fixe ou mobile, peut être réalisé de toute manière réputée appropriée par l'homme du métier, typiquement à l'aide d'un ruban ou d'une succession de rouleaux. Les objets sont ainsi transportés et déposés par le convoyeur 67 à une cadence déterminée en fonction de l'agencement désiré de ces objets par rapport au film de particules 4.

D'ailleurs, avec cette technique, il est non seulement possible de déposer les objets 80 sur le film de particules 4 comme montré sur la figure 11, mais également directement sur le liquide porteur 16 avant que les particules 4 ne viennent les entourer dans la zone de transfert 14, comme cela a été schématisé sur la figure 12. Alternativement, il est aussi possible de déposer les objets 80 sur d'autres objets similaires, comme cela a été représenté sur la figure 13. Sur cette dernière, bien que cela ne soit pas obligatoire, des objets 80 sont en effet déposés sur d'autres objets 80 déjà intégrés au film de particules 4.

Quelle que soit la technique de dépose retenue, chaque objet présente de préférence une grande dimension supérieure à 0,2 cm et inférieure ou égale à L1, c'est-à-dire proche 30 cm. L'épaisseur est comprise entre une dizaine de micromètres et plusieurs dizaines de millimètres.

Certains types d'objets comme les cellules solaires, micro-batteries et composants organiques ont une forme simple de carré, de rectangle, ou encore de disque, avec une faible épaisseur, et une superficie de l'ordre de 0,1 à 100 cm².

Ces composants peuvent comporter des plots ou pinoches sur la face en contact avec le liquide ou sur la face opposée recevant le substrat, pour procéder à leur connectique. D'autres types objets, visant par exemple la détection d'éléments, la génération d'énergie ou encore le transport de l'information, peuvent avoir des formes complexes, par exemple des parties courbées ou en spirale.

Par ailleurs, le rapport entre la grande dimension des particules 4 et celle des objets 80 logés dans le film 4 est préférentiellement compris entre 10⁴ et 10⁸. En effet, la grande dimension des particules est par exemple de l'ordre de 1 nm à 500 µm, tandis que les objets peuvent présenter une grande dimension allant jusqu'à environ 30 cm.

Le tableau ci-dessous recense quelques exemples préférés pour ces objets.

| **Nature** | **Dimensions** | **Domaine d'application** |
|---|---|---|
| Polyéthylène téréphtalate (PET) avec couche d'or structurée en surface | PET : 3x4cm²; épaisseur 250µm; | Electronique organique |
| | PET : 1,5x0,9cm²; épaisseur 250µm, | |
| | Au : épaisseur 30nm | |
| Verre avec cellule photovoltaïque en surface | 25x25mm² ; épaisseur 1,08mm | Cellule Photovoltaïque |
| Puce en silicium | 3x3cm² ; épaisseur 500µm | Electronique |
| | 1x1cm² ; épaisseur 500µm | |
| Micro-batterie sur silicium | 1x1cm² ; épaisseur 500µm | Stockage énergie |
| Matériau métallique bilame (ex. : zinc/cuivre) | 3,5x2cm² ; épaisseur 140µm | Thermique, capteurs |
| | 5x1,6cm² ; épaisseur 200µm | |
| | 7x1,6cm² ; épaisseur 200µm | |

Des applications possibles pour le procédé qui vient d'être décrit ont été mentionnées ci-dessus.

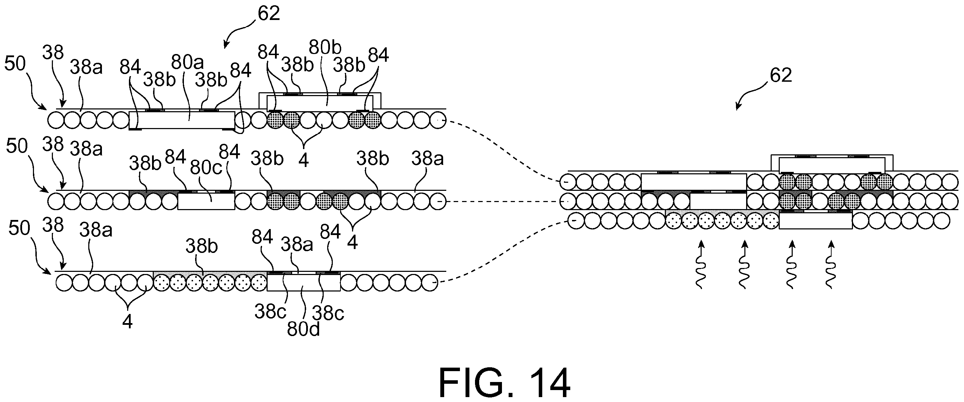

Un exemple particulier de fabrication d'un dispositif optoélectronique 62 va à présent être décrit en référence à la figure 14.

Il est réalisé avec l'empilement de trois ensembles 50 chacun construit selon le procédé spécifique à la présente invention. Les ensembles 50 sont ensuite superposés comme cela est montré sur la partie à droite sur la figure 14, les substrats 38 assurant l'adhérence entre les ensembles empilés. Les ensembles sont en effet superposés de manière à ce que pour deux ensembles 50 directement consécutifs, le premier ensemble comprenne un substrat 38 agencé entre le film compact de particules solides de ce premier ensemble, et le film compact de particules solides du second ensemble, le substrat 38 étant alors au contact et adhérant à ces deux films 4.

Les trois ensembles sont respectivement dénommés ensemble supérieur, ensemble intermédiaire et ensemble inférieur.

L'ensemble inférieur 50 comprend un film compact de particules solides 4 qui est structuré, de plusieurs manières. Tout d'abord, il comprend des particules solides ordonnées 4 de différentes compositions, puisque les billes claires 4 sont électriquement isolantes tandis que les billes légèrement grisées sont réalisées en un matériau différent, de préférence métallique. En outre, la structuration de ce film provient également de son intégration d'un objet 80d, qui est une cellule photovoltaïque entourée de particules 4. Cette cellule 80d présente des plots de connexion orientés vers le haut, et une face opposée orientée vers le bas destinée à constituer une partie de la surface extérieure du dispositif final 62.

Le substrat 38 de cet ensemble inférieur 50 présente lui aussi des zones différenciées. Les plus claires, référencées 38a sont en matériau électriquement isolant, et les plus foncées, référencées 38c et recouvrant les plots 84 de la cellule 80d, sont électriquement conductrices. La zone 38b de grisage intermédiaire, recouvrant les billes 4 métalliques, est transparente à la lumière.

L'ensemble intermédiaire 50 comprend un film compact de particules solides 4 qui est lui aussi structuré, de plusieurs manières. Tout d'abord, il comprend des particules solides ordonnées 4 de différentes compositions, puisque les billes claires 4 sont électriquement isolantes tandis que les billes grisées sont réalisées en un matériau différent, électriquement conducteur. En outre, la structuration de ce film provient également de son intégration d'un objet 80c, qui est une photodiode entourée de particules 4. Cette photodiode 80c présente des plots de connexion 84 orientés vers le haut, et une face opposée orientée vers le bas destinée à contacter la zone 38b transparente à la lumière du substrat de l'ensemble inférieure. De même, les billes 4 électriquement conductrices sont destinées à contacter les zones 38c recouvrant les plots 84 de la cellule photovoltaïque 80d.

Le substrat 38 de cet ensemble intermédiaire 50 présente lui aussi des zones différenciées. Les plus claires, référencées 38a sont en matériau électriquement isolant, et les plus foncées, référencées 38b et recouvrant les plots 84 de la photodiode 80c ainsi que les billes conductrices 4, sont électriquement conductrices.

L'ensemble supérieur 50 comprend un film compact de particules solides 4 qui est lui aussi structuré, de plusieurs manières. Tout d'abord, il comprend des particules solides ordonnées 4 de différentes compositions, puisque les billes claires 4 sont électriquement isolantes tandis que les billes grisées sont réalisées en un matériau différent, électriquement conducteur. En outre, la structuration de ce film provient également de son intégration de deux objets 80a, 80b.

L'objet 80a est une puce logique qui est entourée de particules 4. Cette puce 80a présente des plots de connexion 84 orientés vers le haut et vers le bas, ces derniers étant destinés à être contactés par les zones conductrices 38b recouvrant les plots 84 de la photodiode 80c. L'objet 80b est une micro-batterie reposant sur des billes, notamment avec ses plots inférieurs 84 reposant sur des billes conductrices de cet ensemble supérieur 50. A cet égard, ces billes 4 électriquement conductrices sont destinées à contacter les zones 38b recouvrant les billes conductrices de l'ensemble intermédiaire 50.

Le substrat 38 de cet ensemble supérieur 50 présente lui aussi des zones différenciées. Les plus claires, référencées 38a sont en matériau électriquement isolant, et les plus foncées, référencées 38b et recouvrant les plots 84 des deux objets 80a, 80b, sont électriquement conductrices.

Ainsi, une fois superposés et adhérant les uns aux autres, ces trois ensembles 50 en forme de couches permettent l'obtention d'un dispositif optoélectronique 62 dans lequel l'énergie solaire captée par la cellule photovoltaïque 80d transfert de l'énergie à la micro-batterie 80b. En parallèle, les billes transparentes filtrent le spectre solaire avant qu'il soit détecté par la photodiode 80c, le signal détecté étant alors traité par la puce 80a.

Bien entendu, diverses modifications peuvent être apportées par l'homme du métier à l'invention qui vient d'être décrite, uniquement à titre d'exemples non limitatifs. En particulier, l'invention ne s'applique pas uniquement à la fabrication d'un ensemble avec le film compact de particules en défilement, mais peut être adaptée pour la réalisation d'un ensemble avec ce film maintenu statique sur le liquide porteur, jusqu'à son extraction conjointe avec le substrat.

## Revendications

1. Procédé de fabrication d'un ensemble (50) de particules (4) liées par un substrat (38), comprenant les étapes suivantes :
- réalisation d'un film compact de particules solides (4) flottant sur un liquide porteur (16), les particules solides maintenant éventuellement entre elles des objets (80) ;
- projection de particules sur la face du film compact opposée à celle baignant dans ledit liquide porteur (16), de manière à créer une pellicule formant substrat (38) adhérant auxdites particules solides (4) et recouvrant l'intégralité du film compact de particules solides (4) ; et
- extraction en dehors du liquide porteur (16) de l'ensemble (50) obtenu.

2. Procédé selon la revendication 1, **caractérisé en ce que** l'étape de projection des particules est réalisée par vaporisation d'un liquide ou par nébulisation.

3. Procédé selon la revendication 1 ou la revendication 2, **caractérisé en ce que** les particules projetées lors de l'étape de projection comprennent des monomères polymérisables, et encore plus préférentiellement des monomères photopolymérisables.

4. Procédé selon l'une quelconque des revendications précédentes, **caractérisé en ce que** le liquide porteur (16) se situe dans une zone de transfert (14) comprenant une entrée de particules solides (22) ainsi qu'une sortie de particules solides (26), **en ce que** la zone de transfert est alimentée en particules solides en continu par ladite entrée (22), et **en ce que** ladite étape d'extraction de l'ensemble obtenu (50) s'effectue en continu par ladite sortie (26).

5. Procédé selon la revendication 4, **caractérisé en ce que** ladite étape de réalisation du film compact de particules solides (4) sur le liquide porteur (16) est mise en oeuvre en faisant s'accumuler les particules sur une butée (40) placée à la sortie (26) de la zone de transfert (14).

6. Procédé selon la revendication 5, **caractérisé en ce que** la butée est un rouleau (40) et **en ce que** ladite étape d'extraction de l'ensemble (50) par la sortie (26) de la zone de transfert (14) est réalisée par mise en rotation dudit rouleau (40).

7. Procédé selon l'une quelconque des revendications 4 à 6, **caractérisé en ce qu'**il met en oeuvre une rampe inclinée (12) de circulation des particules solides (4), rattachée à ladite entrée (22) de la zone de transfert (14), et sur laquelle ledit liquide porteur (16) est également de préférence destiné à circuler.

8. Procédé selon l'une quelconque des revendications précédentes, **caractérisé en ce que** ladite étape de projection de particules est réalisée de manière à obtenir une pellicule formant substrat (38) présentant une pluralité de zones (38a, 38b) de caractéristiques différentes.

9. Procédé selon la revendication 8, **caractérisé en ce que** lesdites différentes zones du substrat (38) présentent des compositions différentes.

10. Procédé selon la revendication 8 ou la revendication 9, **caractérisé en ce que** lesdites différentes zones du substrat (38) sont obtenues à l'aide d'un ou plusieurs masques (56a, 56b).

11. Procédé selon l'une quelconque des revendications précédentes, **caractérisé en ce que** ladite pellicule formant substrat (38) est réalisée à partir d'une composition comprenant un composé polymérisable, de préférence photoréticulable, de préférence de l'acrylonitrile.

12. Procédé selon l'une quelconque des revendications précédentes, dans lequel ledit film compact de particules solides (4) maintient au moins un objet (80) parmi le groupe des puces en silicium, des micro-batteries, des composants de l'électronique organique, des éléments métalliques, des cellules photovoltaïques, des piles et micro-piles.

13. Procédé selon l'une quelconque des revendications précédentes, **caractérisé en ce que** la pellicule formant substrat (38) est réalisée de manière à présenter une épaisseur moyenne (e) comprise entre 1 et 100 µm.

14. Procédé de fabrication d'un dispositif (62) à partir d'au moins deux ensembles (50) chacun obtenu par la mise en oeuvre du procédé selon l'une quelconque des revendications précédentes, les deux ensembles (50) étant ensuite superposés.

15. Procédé selon la revendication 14, **caractérisé en ce que** le dispositif (62) est obtenu à partir d'au moins un premier ensemble (50) et un second ensemble (50) superposés et agencés au contact l'un de l'autre, de manière à ce que le premier ensemble comprenne un substrat (38) agencé entre le film compact de particules solides (4) du premier ensemble et le film compact de particules solides (4) du second ensemble, et de façon à ce que ledit substrat (38) comprenne une zone électriquement conductrice assurant la connexion électrique entre des parties électriquement conductrices du premier et du second films de particules solides (4, 4).

16. Procédé selon la revendication 14 ou la revendication 15, **caractérisé en ce qu'**il est mis en oeuvre pour la fabrication d'un dispositif optoélectronique (62).

## Patentansprüche

1. Verfahren zum Herstellen einer Anordnung (50) aus Partikeln (4), die über ein Substrat (38) verbunden sind, umfassend die nachstehenden Schritte:
- Herstellen eines kompakten Films aus festen, auf einer Trägerflüssigkeit (16) schwimmenden Partikeln (4), wobei die festen Partikel gegebenenfalls Objekte (80) zwischen sich halten;
- Aufsprühen von Partikeln auf die Seite des kompakten Films, die derjenigen entgegengesetzt ist, die in der Trägerflüssigkeit (16) eingetaucht ist, so dass eine Substratfolie (38) gebildet wird, die an den festen Partikeln (4) anhaftet und den gesamten kompakten Film aus festen Partikeln (4) überdeckt; und
- Herausnehmen der erhaltenen Anordnung (50) aus der Trägerflüssigkeit (16).

2. Verfahren nach Anspruch 1, **dadurch gekennzeichnet, dass** der Schritt des Aufsprühens der Partikel durch Verdampfung einer Flüssigkeit oder durch Zerstäubung erfolgt.

3. Verfahren nach Anspruch 1 oder Anspruch 2, **dadurch gekennzeichnet, dass** die beim Schritt des Aufsprühens aufgesprühten Partikel polymerisierbare Monomere, vorzugsweise photopolymerisierbare Monomere, enthalten.

4. Verfahren nach einem der vorangehenden Ansprüche, **dadurch gekennzeichnet, dass** die Trägerflüssigkeit (16) in einem Transferbereich (14) liegt, der einen Einlass (22) für feste Partikel sowie einen Auslass (26) für feste Partikel enthält, dass der Transferbereich über den Einlass (22) kontinuierlich mit festen Partikeln gespeist wird und dass der Schritt des Herausnehmens der erhaltenen Anordnung (50) kontinuierlich über den Auslass (26) erfolgt.

5. Verfahren nach Anspruch 4, **dadurch gekennzeichnet, dass** der Schritt des Herstellens des kompakten Films aus festen Partikeln (4) auf der Trägerflüssigkeit (16) dadurch erfolgt, dass die Partikel an einem Anschlag (40) angehäuft werden, der am Auslass (26) des Transferbereichs (14) angeordnet ist.

6. Verfahren nach Anspruch 5, **dadurch gekennzeichnet, dass** der Anschlag eine Walze (40) ist und dass der Schritt des Herausnehmens der Anordnung (50) über den Auslass (26) des Transferbereichs (14) durch Drehen der Walze (40) erfolgt.

7. Verfahren nach einem der Ansprüche 4 bis 6, **dadurch gekennzeichnet, dass** eine geneigte Rampe (12) zur Strömung der festen Partikeln (4) eingesetzt wird, die mit dem Einlass (22) des Transferbereichs (14) verbunden ist und auf welcher auch vorzugsweise die Trägerflüssigkeit (16) strömen soll.

8. Verfahren nach einem der vorangehenden Ansprüche, **dadurch gekennzeichnet, dass** der Schritt des Aufsprühens der Partikel so erfolgt, dass eine Substratfolie (38) erhalten wird, die eine Mehrzahl von Bereichen (38a, 38b) mit unterschiedlichen Eigenschaften aufweist.

9. Verfahren nach Anspruch 8, **dadurch gekennzeichnet, dass** die verschiedenen Bereiche des Substrats (38) unterschiedliche Zusammensetzungen aufweisen.

10. Verfahren nach Anspruch 8 oder Anspruch 9, **dadurch gekennzeichnet, dass** die verschiedenen Bereiche des Substrats (38) mit Hilfe von einer oder mehreren Masken (56a, 56b) erhalten werden.

11. Verfahren nach einem der vorangehenden Ansprüche, **dadurch gekennzeichnet, dass** die Substratfolie (38) aus einer Zusammensetzung hergestellt wird, die eine polymerisierbare, vorzugsweise photovernetzbare, Verbindung, vorzugsweise Acrylnitril, enthält.

12. Verfahren nach einem der vorangehenden Ansprüche, wobei der kompakte Film aus festen Partikeln (4) zumindest ein Objekt (80) aus der Gruppe umfassend Siliciumchips, Mikrobatterie-Elemente, Komponenten der organischen Elektronik, metallische Elemente, Fotovoltaikzellen, Batterien und Mikrobatterien, enthält.

13. Verfahren nach einem der vorangehenden Ansprüche, wobei die Substratfolie (38) so hergestellt ist, dass sie eine mittlere Dicke (e) zwischen 1 und 100 µm aufweist.

14. Verfahren zum Herstellen einer Vorrichtung (62) ausgehend von zumindest zwei Anordnungen (50), die jeweils durch Durchführen des Verfahrens nach einem der vorangehenden Ansprüche erhalten werden, wobei die beiden Anordnungen (50) dann übereinandergeordnet werden.

15. Verfahren nach Anspruch 14, **dadurch gekennzeichnet, dass** die Vorrichtung (62) ausgehend von zumindest einer ersten Anordnung (50) und einer zweiten Anordnung (50) erhalten wird, die übereinandergeordnet und in Kontakt miteinander gebracht werden, so dass die erste Anordnung ein Substrat (38) enthält, das zwischen dem kompakten Film aus festen Partikeln (4) der ersten Anordnung und dem kompakten Film aus festen Partikeln (4) der zweiten Anordnung angeordnet ist, und so dass das Substrat (38) einen elektrisch leitfähigen Bereich enthält, welcher die elektrische Verbindung zwischen den elektrisch leitfähigen Teilen des ersten und des zweiten Films aus festen Partikeln (4, 4) sicherstellt.

16. Verfahren nach Anspruch 14 oder Anspruch 15, **dadurch gekennzeichnet, dass** es zum Herstellen einer optoelektronischen Vorrichtung (62) durchgeführt wird.

## Claims

1. A method for producing an assembly (50) of particles (4) bound by a substrate (38), comprising the following steps:
- making a compact film of solid particles (4) floating on a carrier liquid (16), the solid particles potentially holding objects (80) between them;
- spraying particles onto the face of the compact film opposite to the one immersed in said carrier liquid (16), so as to create a substrate-forming-skin (38) adhering to said solid particles (4) and covering the full compact film of solid particles (4); and
- extracting the obtained assembly (50) outside the carrier liquid (16).

2. The method according to claim 1, **characterised in that** the step of spraying the particles is performed by vaporization of a liquid or by nebulization.

3. The method according to claim 1 or claim 2, **characterised in that** the particles sprayed during the step of spraying comprise polymerizable monomers, and even more preferably photopolymerizable monomers.

4. The method according to any of the preceding claims, **characterised in that** the carrier liquid (16) is located in a transfer area (14) comprising an inlet of solid particles (22) as well as an outlet of solid particles (26), and **in that** the transfer area is continuously supplied with solid particles through said inlet (22), and **in that** said step of extracting the obtained assembly (50) is continuously performed through said outlet (26).

5. The method according to claim 4, **characterised in that** said step of making the compact film of solid particles (4) on the carrier liquid (16) is implemented by making particles build up on a stop (40) placed at the outlet (26) of the transfer area (14).

6. The method according to claim 5, **characterised in that** the stop is a roller (40) and **in that** said step of extracting the assembly (50) through the outlet (26) of the transfer area (14) is performed by rotating said roller (40).

7. The method according to any of claims 4 to 6, **characterised in that** it implements a tilted ramp (12) for circulating solid particles (4), connected to said inlet (22) of the transfer area (14), and on which said carrier liquid (16) is also preferably intended to circulate.

8. The method according to any of the preceding claims, **characterised in that** said step of spraying particles is performed so as to obtain a substrate-forming skin (38) having a plurality of areas (38a, 38b) with different characteristics.

9. The method according to claim 8, **characterised in that** said different areas of the substrate (38) have different compositions.

10. The method according to claim 8 or claim 9, **characterised in that** said different areas of the substrate (38) are obtained using one or more masks (56a, 56b).

11. The method according to any of the preceding claims, **characterised in that** said substrate-forming skin (38) is made from a composition comprising a polymerizable, preferably photo-crosslinkable compound, preferably acrylonitrile.

12. The method according to any of the preceding claims, wherein said compact film of solid particles (4) holds at least one object (80) among the group of silicon chips, micro-batteries, components of organic electronics, metal elements, photovoltaic cells, cells, and micro-cells.

13. The method according to any of the preceding claims, **characterised in that** the substrate-forming skin (38) is made so as to have an average thickness (e) between 1 and 100 µm.

14. A method for producing a device (62) from at least two assemblies (50), each being obtained by implementing a method according to any of the preceding claims, both assemblies (50) being then superimposed.

15. The method according to claim 14, **characterised in that** the device (62) is obtained from at least a first assembly (50) and a second assembly (50) superimposed and arranged in contact with each other, so that the first assembly comprises a substrate (38) arranged between the compact film of solid particles (4) of the first assembly and the compact film of solid particles (4) of the second assembly, and so that said substrate (38) comprises an electrically conductive area providing the electrical connection between electrically conductive parts of the first and second films of solid particles (4, 4).

16. The method according to claim 14 or claim 15, **characterised in that** it is implemented for producing an optoelectronic device (62).
